# EUROPEAN PATENT APPLICATION

(11) **EP 4 746 163 A1**
(43) Date of publication of application: **20.05.2026**
(21) Application number: 24874966.5
(22) Date of filing: 04.10.2024
(51) Int. Cl.: H01M 50/342, H01M 50/325, H01M 50/543, H01M 10/04, H01M 10/658

(54) **BATTERY CELL AND BATTERY ASSEMBLY COMPRISING SAME**

(30) Priority: 06.10.2023 KR 20230133551
(71) Applicant: LG Energy Solution, Ltd., Seoul 07335 (KR)
(72) Inventor: HWANG, Won Pill, Daejeon 34122 (KR); LEE, Jin Kyu, Daejeon 34122 (KR); KANG, Ye Ran, Daejeon 34122 (KR); PARK, Jun Kyu, Daejeon 34122 (KR); YOON, Doo Han, Daejeon 34122 (KR); KIM, Sun Jae, Daejeon 34122 (KR)
(74) Representative: Plasseraud IP
(86) International application number: PCT/KR2024/015051
(87) International publication number: WO 2025/075410

(57) **Abstract**

The present technology provides a battery cell including: an electrode assembly; a cover sheet including a body part surrounding the electrode assembly and a sealing bonding part extending from one side of the body part in a first direction, in which the sealing bonding part includes at least one notch part; and a first multifunctional terminal block (MTB) provided on an end of the electrode assembly and including a first housing connected to the body part.

## Description

### [Technical Field]

The present invention relates to a battery cell and a battery assembly including the same.

This application claims the benefit of priority based on Korean Patent Application No. 10-2023-0133551, filed on October 6, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery cell and a battery assembly including the same.

### [Technical Solution]

An aspect of the present invention provides a battery cell including: an electrode assembly; a cover sheet including a body part surrounding the electrode assembly and a sealing bonding part at a side of the body part and extending in a first direction, in which the sealing bonding part includes at least one notch part; and a first multifunctional terminal block (MTB) provided at an end of the electrode assembly and including a first housing connected to the body part.

In example embodiments, the sealing bonding part may include a plurality of notch parts spaced apart from each other in the first direction.

In example embodiments, the sealing bonding part may include a first edge connected to the body part and a second edge opposite to the first edge.

In example embodiments, the at least one notch part may extend from the second edge of the sealing bonding part toward the first edge.

In example embodiments, the battery cell may further include a fixing tape configured to fix the sealing bonding part to the body part of the cover sheet, and the fixing tape may be spaced apart from the at least one notch part.

In example embodiments, the sealing bonding part may include a central portion and an edge portion, the fixing tape may fix the edge portion of the sealing bonding part to the body part of the cover sheet, and the at least one notch part may be provided to the central portion of the sealing bonding part.

In example embodiments, a width of the central portion of the sealing bonding part may be less than a width of the edge portion of the sealing bonding part.

In example embodiments, the battery cell may further include an elastic band configured to bring an edge portion of the sealing bonding part and the body part of the cover sheet into close contact with the first housing.

In example embodiments, the body part of the cover sheet may be attached to the first housing.

In example embodiments, the first MTB may further include an external terminal mounted in the first housing and connected to an electrode lead of the electrode assembly.

In example embodiments, the first MTB may further include a rupture disk mounted in the first housing, and the rupture disk may be configured to rupture and discharge a gas when internal pressure of the battery cell increases.

In example embodiments, the first MTB may further include a check valve mounted in the first housing, and the check valve may be configured to be opened to discharge an internal gas when internal pressure of the battery cell is higher than reference pressure and to be closed after the internal pressure decreases.

In example embodiments, the battery cell may further include a second MTB spaced apart from the first MTB in the first direction with the electrode assembly interposed between the first and second MTBs, and the second MTB may include a second housing connected to the body part of the cover sheet.

Another aspect of the present invention provides a battery assembly including: a plurality of battery cells; a cooling pad between the plurality of battery cells; an electrode assembly; a cover sheet including a body part surrounding the electrode assembly and a sealing bonding part at a side of the body part and extending in a first direction, in which the sealing bonding part includes at least one notch part; and a multifunctional terminal block (MTB) provided at an end of the electrode assembly and including a housing connected to the body part.

In example embodiments, the body part of the cover sheet may include an upper portion covering an upper surface of the electrode assembly and a side portion covering a side surface of the electrode assembly, the cooling pad may be in contact with the side portion of the body part of the cover sheet, and the sealing bonding part may be connected to the upper portion of the bonding part of the cover sheet.

In example embodiments, the battery assembly may further include a fixing tape configured to fix an edge portion of the sealing bonding part to the body part of the cover sheet, and the at least one notch part may be provided to a central portion of the sealing bonding part.

### [Advantageous Effects]

According to example embodiments of the present invention, a central portion of a sealing bonding part of a battery cell includes a notch part and thus can be unsealed first and a high-temperature gas or flames generated in the battery cell can be discharged upward through the unsealed central portion of the sealing bonding part, when internal pressure of the battery cell increases. Accordingly, heat propagation between adjacent battery cells can be prevented, thereby improving the safety of a battery assembly including the battery cell.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery cell according to example embodiments of the present invention.
FIG. 2 is an exploded perspective view of the battery cell of FIG. 1.
FIG. 3 is a cross-sectional view of a part of the battery cell of FIG. 1.
FIG. 4 is a plan view of a part of a battery cell.
FIGS. 5a to 5c are perspective views illustrating a manufacturing method of a battery cell.
FIG. 6 is a plan view of a part of a battery cell according to embodiments of the present invention.
FIG. 7 is a perspective view of a battery assembly according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

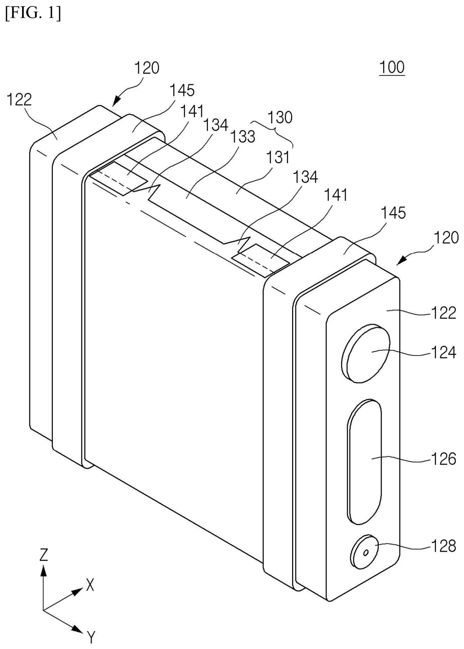

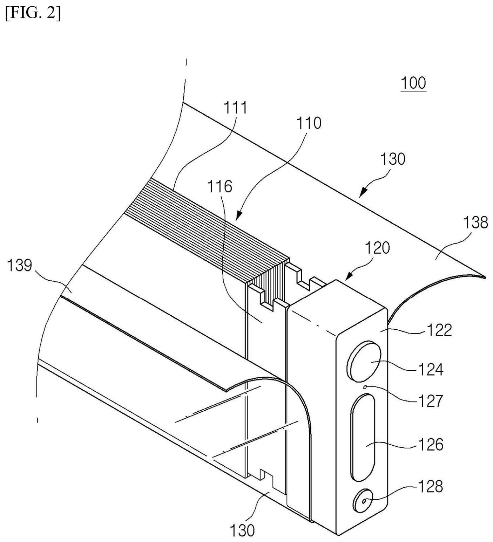

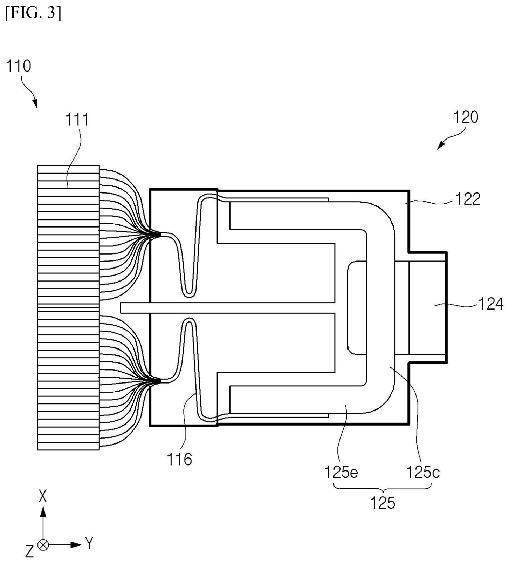

FIG. 1 is a perspective view of a battery cell 100 according to example embodiments of the present invention. FIG. 2 is an exploded perspective view of the battery cell 100 of FIG. 1. FIG. 3 is a cross-sectional view of a part of the battery cell 100 of FIG. 1.

Referring to FIGS. 1 to 3, the battery cell 100 may include an electrode assembly 110, a multifunctional terminal blocks (MTBs) 120, and a cover sheet 130.

The electrode assembly 110 may include a plurality of unit cells 111. Each of the plurality of unit cells 111 may be a metal foil operating as a current collector and coated with an electrode material. In example embodiments, the electrode assembly 110 is a stack type electrode assembly, and the plurality of unit cells 111 may be stacked together in a second direction (e.g., an X-axis direction). The electrode assembly 110 including the plurality of unit cells 111 may have a roughly rectangular parallelepiped shape. The electrode assembly 110 may have a first side surface and a second side surface that are opposite to each other in the second direction (e.g., the X-axis direction), and an upper surface and a lower surface that are opposite to each other in a third direction (e.g., a Z-axis direction).

Each of the unit cells 111 may have a thin plate-shaped body extending in a first direction (e.g., a Y-axis direction). Each of the unit cells 111 may be a positive-electrode unit cell or a negative-electrode unit cell. In some embodiments, the plurality of unit cells 111 may be a structure in which a positive-electrode unit cell and a negative-electrode unit cell are alternately stacked. The positive-electrode unit cell and the negative-electrode unit cell may be separated from each other by a separator. In some embodiments, the plurality of unit cells 111 may be a structure in which a plurality of positive-electrode unit cells and a plurality of negative-electrode unit cells are alternately stacked. The plurality of positive-electrode unit cells and the plurality of negative-electrode unit cells may be separated from each other by a separator.

The electrode assembly 110 may include electrode leads 116 on opposite ends thereof in the first direction (e.g., the Y-axis direction). The electrode leads 116 may be electrically connected to electrode tabs of the plurality of unit cells 111. One or more electrode tabs may be connected to one electrode lead 116. In some embodiments, two or more electrode tabs may be connected to one electrode lead 116.

In some embodiments, two electrode leads 116 may be provided on each of one side of the electrode assembly 110 and another side thereof. In this case, half of the plurality of unit cells 111 included in the electrode assembly 110 may be coupled to one of the two electrode leads 116 on the one side of the electrode assembly 110 and one of the two electrode leads 116 on the other side of the electrode assembly 110. The other half of the plurality of unit cells 111 included in the electrode assembly 110 may be coupled to the other electrode lead 116 on the one side of the electrode assembly 110 and the other electrode lead 116 on the other side of the electrode assembly 110. However, the present invention is not limited thereto.

In some embodiments, one or three or more electrode leads 116 may be provided on one side of the electrode assembly 110. In some embodiments, one or three or more electrode leads 116 may be provided on another side of the electrode assembly 110.

The MTBs 120 may be on opposite ends of the electrode assembly 110 in the first direction (e.g., the Y-axis direction). The MTBs 120 may be spaced apart from each other in the first direction (e.g., the Y-axis direction) with the electrode assembly 110 interposed therebetween. For example, a first MTB may be provided on one end of the electrode assembly 110 in the first direction (e.g., the Y-axis direction), and a second MTB may be provided at another end of the electrode assembly 110 in the first direction (e.g., the Y-axis direction). In this case, one of the first MTB and the second MTB may be electrically connected to a side of a positive electrode of the electrode assembly 110, and the other may be electrically connected to a side of a negative electrode of the electrode assembly 110. The first MTB and the second MTB may be different from each other in electrical polarity but may have substantially the same or similar configuration.

The MTBs 120 may each include an MTB housing 122, and an external terminal 124, a bus bar 125, a rupture disk 126, and a check valve 128 that are installed in the MTB housing 122. In the present disclosure, two MTBs 120 may be referred to as a first MTB and a second MTB, an MTB housing 122 of the first MTB may be referred to as a first MTB housing, and an MTB housing 122 of the second MTB may be referred to as a second MTB housing.

The MTB housing 122 may be formed of a material having relatively high rigidity such as a metal and define the appearance of the MTB 120. In some embodiments, the MTB housing 122 may be formed of aluminum (Al), nickel (Ni), iron (Fe), cobalt (Co), chromium (Cr), manganese (Mn), or an alloy including at least one of them.

The MTB housing 122 may be provided with a through-hole for exposing the external terminal 124 to the outside. The through-hole of the MTB housing 122 may be provided in the MTB housing 122 to expose the external terminal 124 to the outside in the first direction (e.g., the Y-axis direction). A shape of the through-hole may be configured to match an external shape of a portion of the external terminal 124 exposed to the outside.

The external terminal 124 may be accommodated in the MTB housing 122 and inserted into and mounted in the through-hole of the MTB housing 122. The external terminal 124 may be formed of a metal or a metal alloy having low electrical resistance, for example, copper (Cu), aluminum (Al), nickel (Ni), iron (Fe), platinum (Pt), manganese (Mn), or an alloy including at least one of them.

In some embodiments, a surface of the external terminal 124 exposed from the MTB housing 122 toward the outside may be a flat surface. In some embodiments, the exposed surface of the external terminal 124 may include a plane extending perpendicular to the first direction (e.g., the Y-axis direction).

In some embodiments, an electrically insulating spacer may be provided between the external terminal 124 and the MTB housing 122 to electrically insulate the external terminal 124 from the MTB housing 122.

The rupture disk 126 may be installed in the through-hole in the MTB housing 122. The rupture disk 126 may be configured to, when internal pressure of the battery cell 100 excessively increases, rupture and discharge a gas that is a cause of the excessive increase in the internal pressure. When the rupture disk 126 ruptures due to a thermal event occurring inside the battery cell 100, the rupture disk 126 is not restored to an original state thereof. The rupture disk 126 may be inserted into and installed in the through-hole in the MTB housing 122. The rupture disk 126 may be a rupture disk 126 known in the art and is not particularly limited. The rupture disk 126 may be provided on at least one of the two MTBs 120 on the opposite ends of the battery cell 100.

The check valve 128 may be installed in the through-hole in the MTB housing 122. The check valve 128 may be configured to open or close a gas discharge passage according to internal pressure of the battery cell 100. The check valve 128 may be configured to open the gas discharge passage to discharge an internal gas when the internal pressure of the battery cell 100 is higher than reference pressure and to close the gas discharge passage when the internal pressure decreases. The check valve 128 may close the gas discharge passage to stop discharging the internal gas when the internal pressure of the battery cell 100 is less than or equal to the reference pressure. The check valve 128 may be inserted into and installed in the through-hole in the MTB housing 122. Because no part of the check valve 128 ruptures due to the discharging of the internal gas, the check valve 128 may be restored to an original state thereof after the internal gas is discharged. The check valve 128 may be provided in at least one of the two MTBs 120 on the opposite ends of the battery cell 100.

In some embodiments, the MTB 120 may include an electrolyte inlet 127 through which an electrolyte may be injected. The electrolyte inlet 127 may be provided in the MTB housing 122. In some embodiments, the electrolyte inlet 127 may be provided to only one of the two MTBs 120 on the opposite ends of the battery cell 100. The electrolyte injected through the electrolyte inlet 127 may be an electrolyte for use in general lithium secondary batteries and is not particularly limited.

The bus bar 125 may electrically connect the external terminal 124 to the electrode lead 116 of the electrode assembly 110. The bus bar 125 may be mounted in the MTB housing 122.

The bus bar 125 may be provided in surface contact with the external terminal 124. The bus bar 125 may be formed of a metal material having low electrical resistance. In some embodiments, the bus bar 125 may be formed of copper (Cu), nickel (Ni), aluminum (Al), iron (Fe), cobalt (Co), platinum (Pt), molybdenum (Mo), tin (Sn), palladium (Pd), or an alloy including at least one of them.

In embodiments, a material of the bus bar 125 and a material of the external terminal 124 may be different from each other. In some embodiments, the bus bar 125 may include copper, and the external terminal 124 may include aluminum. In some example embodiments, the material of the bus bar 125 and the material of the external terminal 124 may be the same.

The bus bar 125 may be configured to be in surface contact with the electrode lead 116 of the electrode assembly 110. In some embodiments, the bus bar 125 may be coupled to the electrode lead 116 by welding.

In some embodiments, the bus bar 125 may include a flat plate type central part 125c generally extending in the second direction (e.g., the X-axis direction) and the third direction (e.g., the Z-axis direction), and an edge part 125e extending after being bent from the central part 125c. The central part 125c may be in contact with the external terminal 124, and the edge part 125e may be in contact with the electrode lead 116 of the electrode assembly 110.

The bus bar 125 may include two edge parts 125e facing each other in the second direction (e.g., the X-axis direction), and each of the two edge parts 125e may have a flat plate shape generally extending in the first direction (e.g., the Y-axis direction) and the third direction (e.g., the Z-axis direction). One of the two edge parts 125e may extend in the first direction (e.g., the Y-axis direction) from one end of the central part 125c in the second direction (e.g., the X-axis direction), and the other edge part 125e may extend in the first direction (e.g., the Y-axis direction) from another end of the central part 125c in the second direction (e.g., the X-axis direction). The central part 125c and the two edge parts 125e may be configured to form a U-shaped cross-sectional shape together. When the two edge parts 125e are referred to as a first edge part and a second edge part, an outer side surface of the first edge part may include a plane in surface contact with a first electrode lead of the electrode assembly 110, and an outer side surface of the second edge part may include a plane in surface contact with a second electrode lead of the electrode assembly 110.

In some embodiments, a part of the electrode lead 116 that is not in contact with the bus bar 125 may include a pre-bent portion. The pre-bent portion may prevent stress from being concentrated on a certain part of the electrode lead 116 due to an external force applied to the electrode assembly 110, thereby improving safety.

The cover sheet 130 may provide an accommodation space for accommodation of the electrode assembly 110. The cover sheet 130 may include a body part 131 surrounding the electrode assembly 110, and a sealing bonding part 133 extending or protruding from the body part 131.

The body part 131 of the cover sheet 130 may surround the electrode assembly 110 to form an accommodation space for accommodation of the electrode assembly 110. The body part 131 of the cover sheet 130 may be connected to the MTB housings 122 of the MTBs 120. For example, a first edge portion of the body part 131 of the cover sheet 130 may be attached to the first housing of the first MTB, and a second edge portion of the body part 131 of the cover sheet 130 may be attached to the second housing of the second MTB. The first edge portion of the body part 131 of the cover sheet 130 may be in continuous contact with the perimeter of the first housing of the first MTB, and the second edge portion thereof may be in continuous contact with the perimeter of the second housing of the second MTB. The body part 131 of the cover sheet 130 may include a first side portion facing the first side surface of the electrode assembly 110 and first side surfaces of the two MTB housings 122, a second side portion facing the second side surface of the electrode assembly 110 and second side surfaces of the two MTB housings 122, an upper portion facing the upper surface of the electrode assembly 110 and upper surfaces of the two MTB housings 122, and a lower portion facing the lower surface of the electrode assembly 110 and lower surfaces of the two MTB housings 122. The body part 131 of the cover sheet 130 may form an accommodation space of the battery cell 100 for accommodation of the electrode assembly 110, together with the MTB housings 122 of the two MTBs 120.

The sealing bonding part 133 may seal the accommodation space of the body part 131 in which the electrode assembly 110 is accommodated. The sealing bonding part 133 may be connected to an upper portion of the body part 131 and extend in the first direction (e.g., the Y-axis direction). The sealing bonding part 133 may be a bonding structure in which a first part 138 and a second part 139 of the cover sheet 130 are bonded together. For example, to manufacture the cover sheet 130, the electrode assembly 110 may be surrounded with the single cover sheet 130 and thereafter the first part 138 and the second part 139 of the cover sheet 130 may be bonded together to form the sealing bonding part 133.

In example embodiments, the cover sheet 130 may be a laminate sheet including one or more resin layers and one or more metal layers. The one or more resin layers and the one or more metal layers may be stacked on each other.

According to example embodiments of the present invention, the battery cell 100 accommodates all units with various functions, e.g., the external terminal 124, the rupture disk 126, the check valve 128, the electrolyte inlet 127, the bus bar 125, etc., in the MTB 120 and thus has functions corresponding to those of a general battery module. Therefore, the battery cell 100 according to embodiments may have high degree of freedom and compatibility and thus contribute to implementing a cell-to-pack.

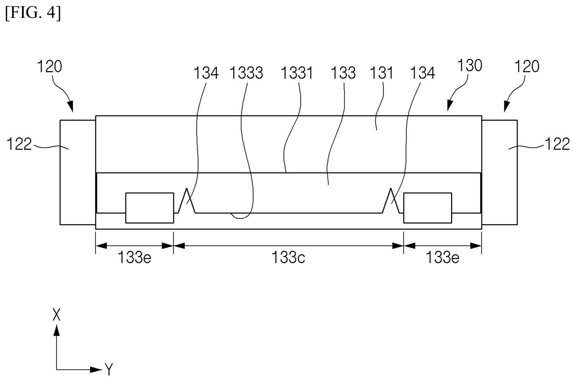

FIG. 4 is a plan view of a part of the battery cell 100.

Referring to FIGS. 1 and 4, the sealing bonding part 133 may include at least one notch part 134. When the sealing bonding part 133 includes a first edge 1331 connected to the body part 131 and a second edge 1333 opposite to the first edge 1331, the notch part 134 may extend from the second edge 1333 of the sealing bonding part 133 toward the first edge 1331. The first edge 1331 of the sealing bonding part 133 may be a boundary between the sealing bonding part 133 and the body part 131 and extend from one end of the body part 131 to another end thereof in the first direction (e.g., the Y-axis direction). In example embodiments, the sealing bonding part 133 may include a plurality of notch parts 134 spaced apart from each other in the first direction (e.g., the Y-axis direction). FIG. 4 illustrates that the sealing bonding part 133 includes two notch parts 134 but the sealing bonding part 133 may include three or more notch parts 134.

The sealing bonding part 133 may include two edge portions 133e and a central portion 133c between the two edge portions 133e in the first direction (e.g., the Y-axis direction). In the sealing bonding part 133, a length of each of the edge portions 133e in the first direction (e.g., the Y-axis direction) may be between 10% and 40%, between 15% and 35%, or between 20% and 30% of a total length of the sealing bonding part 133 in the first direction (e.g., the Y-axis direction).

In example embodiments, the battery cell 100 may include fixing tapes 141 for fixing the edge portions 133e of the sealing bonding part 133 to the body part 131. Each of the fixing tapes 141 may allow a corresponding one of the edge portions 133e of the sealing bonding part 133 to be fixed to the body part 131. A part of each of the fixing tapes 141 may be attached to the edge portion 133e of the sealing bonding part 133, and an another part of each of the fixing tapes 141 may be attached to the body part 131.

The fixing tapes 141 may be spaced apart from the notch parts 134 of the sealing bonding part 133. That is, the fixing tapes 141 may not cover the notch parts 134 of the sealing bonding part 133. The fixing tapes 141 may fix the edge portions 133e of the sealing bonding part 133 to the body part 131 of the cover sheet 130, and the notch parts 134 may be provided to the central portion 133c of the sealing bonding part 133 that is not fixed to the body part 131 of the cover sheet 130 by the fixing tapes 141.

In example embodiments, the battery cell 100 may include elastic bands 145 for closely fixing the cover sheet 130 to the MTB housings 122. Each of the elastic bands 145 may fix a corresponding one of the edge portions 133e of the sealing bonding part 133 and the body part 131 to a corresponding one of the MTB housings 122. Each of the elastic bands 145 may be in the form of ring extending to surround one of the MTB housings 122.

In the sealing bonding part 133 of the cover sheet 130, sealing strength of the sealing bonding part 133 may be relatively low in a region in which the notch parts 134 are provided. In this case, when internal pressure of the battery cell 100 increases, the central portion 133c of the sealing bonding part 133 in which the notch parts 134 are provided may be unsealed first and a high-temperature gas or flames generated in the battery cell 100 may be discharged upward through the unsealed central portion 133c of the sealing bonding part 133. According to the present invention, the high-temperature gas or flames generated in the battery cell 100 are intensively discharged through the central portion 133c of the sealing bonding part 133 of the cover sheet 130 to prevent heat propagation between adjacent battery cells 100, thereby improving the safety of a battery assembly including the battery cell 100.

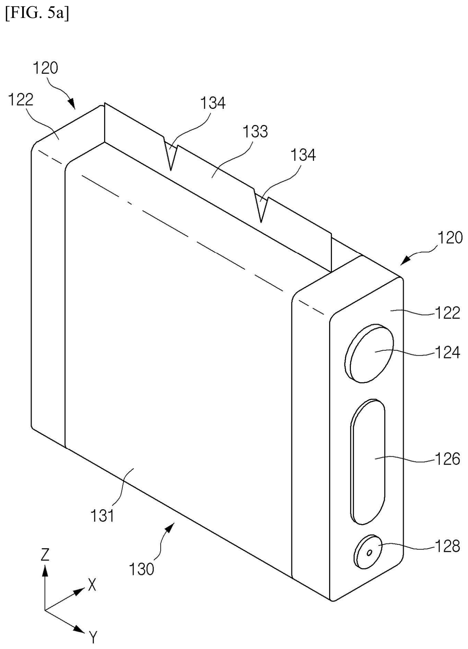

FIGS. 5a to 5c are perspective views illustrating a manufacturing method of a battery cell 100.

Referring to FIG. 5a, the cover sheet 130 is formed to be attached to the MTB housings 122 of the two MTBs 120. For example, a single sheet may be attached along the perimeters of the MTB housings 122 of the two MTBs 120 and a first part and a second part of the single sheet may be bonded together. Thereafter, a part of a bonding structure in which the first and second parts of the single sheet are bonded together may be removed to form the cover sheet 130 including the sealing bonding part 133 with the notch parts 134.

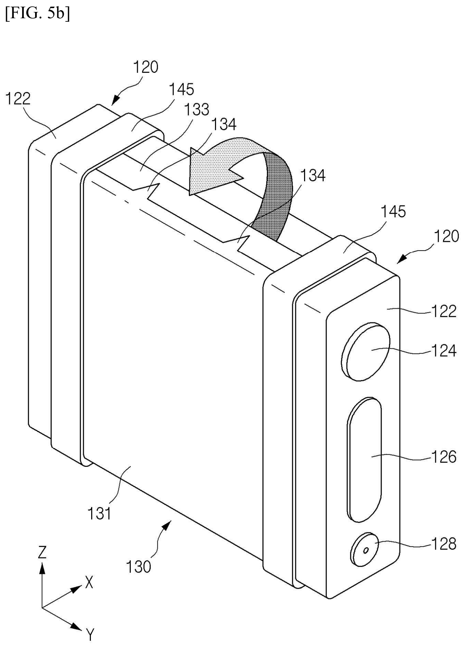

Referring to FIG. 5b, edge parts of the cover sheet 130 are closely fixed to the perimeter of the MTB housing 122 by using the elastic bands 145. The elastic bands 145 may allow the sealing bonding part 133 to be in close contact with an outer surface of the body part 131.

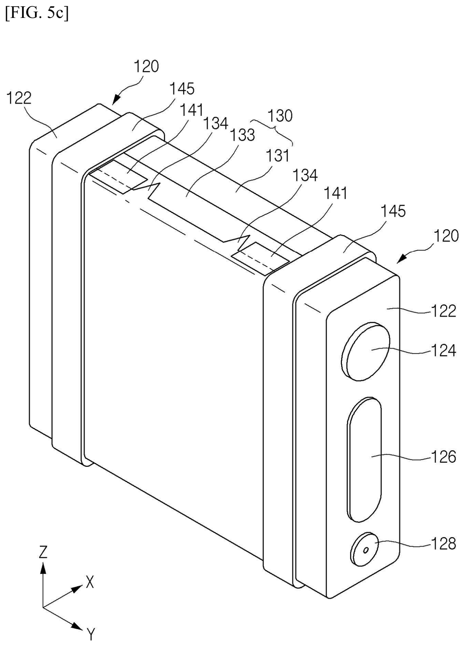

Referring to FIG. 5c, edge portions of the sealing bonding part 133 are fixed to the body part 131 using the fixing tapes 141. The fixing tapes 141 may allow two edge portions of the sealing bonding part 133 to be fixed to the outer surface of the body part 131.

### (Second Embodiment)

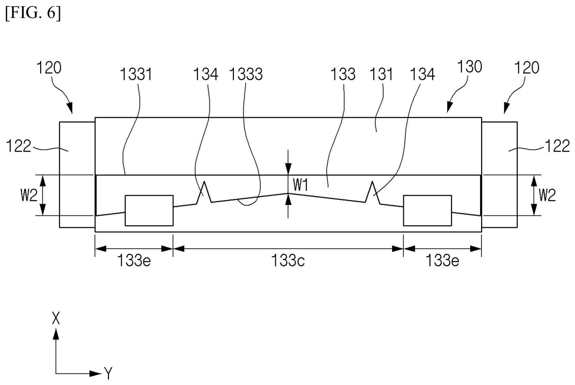

FIG. 6 is a plan view of a part of a battery cell according to embodiments of the present invention. Hereinafter, the battery cell of FIG. 6 will be described focusing on differences from the battery cell 100 described above with reference to FIGS. 1 to 4.

Referring to FIG. 6, a width of a sealing bonding part 133 may vary depending on a position of the sealing bonding part 133 in the first direction (e.g., the Y-axis direction). The width of the sealing bonding part 133 may be understood as a length of the sealing bonding part 133 in a direction perpendicular to the first direction (e.g., the Y-axis direction). Alternatively, when the sealing bonding part 133 includes a first edge 1331 connected to a body part 131 and a second edge 1333 opposite to the first edge 1331, the width of the sealing bonding part 133 may be understood as a distance between the first edge 1331 and the second edge 1333 of the sealing bonding part 133.

In example embodiments, when the sealing bonding part 133 has a minimum width W1 at a first point thereon, the first point on the sealing bonding part 133 may be in a central portion 133c of the sealing bonding part 133. In example embodiments, an end portion of the sealing bonding part 133 in the first direction (e.g., the Y-axis direction) may have a maximum width W2 . In example embodiments, the width of the sealing bonding part 133 may increase as a distance to the first point increases.

In example embodiments, a profile of the second edge 1333 of the sealing bonding part 133 may include a plurality of straight lines, e.g., two straight lines.

In example embodiments, the minimum width W1 of the sealing bonding part 133 may be between 10% and 90%, between 15% and 85%, between 20% and 80%, between 25% and 75%, or between 30% and 70% of the maximum width W2 of the sealing bonding part 133. In example embodiments, the minimum width W1 of the sealing bonding part 133 may be 3 mm or more. In example embodiments, the maximum width W2 of the sealing bonding part 133 may be less than or equal to a width of the upper portion of the body part 131 in the second direction (e.g., the X-axis direction) or a width of the MTB housing 122 in the second direction (e.g., the X-axis direction).

In example embodiments, the widths of the edge portions 133e of the sealing bonding part 133 may decrease as a distance to an end portion of the sealing bonding part 133 in the first direction (e.g., the Y-axis direction) increases.

In the sealing bonding part 133 of the cover sheet 130, sealing strength of each region of the sealing bonding part 133 may be proportional to a width of each region of the sealing bonding part 133. In embodiments, the central portion 133c of the sealing bonding part 133 has a minimum width and thus may be unsealed first and a high-temperature gas or flames generated in the battery cell may be discharged upward through the unsealed central portion 133c of the sealing bonding part 133, when internal pressure of the battery cell increases. According to the present invention, the high-temperature gas or flame generated in the battery cell can be intensively discharged through the central portion 133c of the sealing bonding part 133 of the cover sheet 130 to prevent heat propagation between adjacent battery cells, thereby improving the safety of a battery assembly including the battery cell.

### (Third Embodiment)

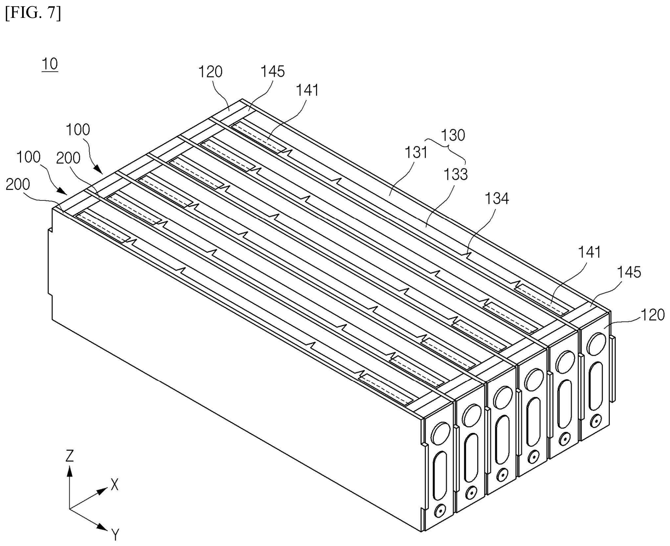

FIG. 7 is a perspective view of a battery assembly 10 according to example embodiments of the present invention.

Referring to FIG. 7, the battery assembly 10 may include a plurality of battery cells 100 and a plurality of cooling pads 200. The plurality of battery cells 100 may be arranged in the second direction (e.g., the X-axis direction), and a cooling pad 200 may be disposed between two adjacent battery cells 100.

The cooling pad 200 may be disposed between two adjacent battery cells 100 in the first direction (e.g., the Y-axis direction). The two battery cells 100 may be spaced apart from each other in the first direction (e.g., the Y-axis direction) by the cooling pad 200. The cooling pad 200 may be attached to a side of a body part 131 of a cover sheet 130 of an adjacent battery cell 100 and/or the MTB housing 122.

The cooling pad 200 may be configured to cool the adjacent battery cell 100. In some embodiments, the cooling pad 200 may be configured to absorb heat from the adjacent battery cell 100 to cool the battery cell 100. For example, the cooling pad 200 may include an endothermic material layer therein. For example, the endothermic material layer of the cooling pad 200 may include an absorbent member such as a super absorbent polymer (SAP). The cooling pad 200 may be disposed between adjacent battery cells 100 in the first direction (e.g., the Y-axis direction) and function as a thermal barrier for thermally separating the battery cells 100 from each other. Because the cooling pad 200 is disposed between the plurality of battery cells 100, even when one of the plurality of battery cells 100 ignites, thermal propagation between the igniting battery cell 100 and another battery cell 100 may be blocked or suppressed by the cooling pad 200.

In addition, the cooling pad 200 may be configured to have a certain level of rigidity using an internal support structure and/or an internal filler to prevent or suppress swelling and deformation of the battery cell 100. Furthermore, the cooling pad 200 may be configured to have a certain level of elasticity using the internal support structure and/or the internal filler and to elastically deform in the first direction (e.g., the Y-axis direction), which is an arrangement direction of the battery cells 100. The cooling pad 200 may elastically deform in the first direction (e.g., the Y-axis direction) and thus may function as a buffer pad against deformation of the battery cell 100 (e.g., deformation of the battery cell 100 due to swelling).

According to example embodiments of the present invention, the cooling pad 200 functioning as a thermal barrier and a buffer may be disposed between adjacent battery cells 100 to prevent thermal propagation between the battery cells 100 and improve structural safety of the battery cells 100. Accordingly, the safety and reliability of the battery assembly 10 including the battery cells 100 may improve.

According to example embodiments of the present invention, both sides of each battery cell 100 may be in contact with the cooling pad 200 and a lower part thereof may be in contact with an external heat sink. In this case, a high-temperature gas or flames generated in each battery cell 100 may be discharged upward through the central portion 133c of the sealing bonding part 133 having relatively low sealing strength. According to the present invention, a high-temperature gas or flames generated in the battery cell 100 can be intensively discharged through the central portion 133c of the sealing bonding part 133 of the cover sheet 130 to prevent heat propagation between adjacent battery cells 100, thereby improving the safety of the battery assembly 10 including the battery cell 100.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell comprising:
an electrode assembly;
a cover sheet including a body part surrounding the electrode assembly and a sealing bonding part at a side of the body part and extending in a first direction, wherein the sealing bonding part includes at least one notch part; and
a first multifunctional terminal block (MTB) provided at an end of the electrode assembly and including a first housing connected to the body part.

2. The battery cell of claim 1, wherein
the sealing bonding part comprises a plurality of notch parts spaced apart from each other in the first direction.

3. The battery cell of claim 1, wherein
the sealing bonding part comprises a first edge connected to the body part and a second edge opposite to the first edge, and
the at least one notch part extends from the second edge of the sealing bonding part toward the first edge.

4. The battery cell of claim 1, further comprising
a fixing tape configured to fix the sealing bonding part to the body part of the cover sheet,
wherein the fixing tape is spaced apart from the at least one notch part.

5. The battery cell of claim 4, wherein
the sealing bonding part comprises a central portion and an edge portion,
wherein the fixing tape fixes the edge portion of the sealing bonding part to the body part of the cover sheet, and
the at least one notch part is provided to the central portion of the sealing bonding part.

6. The battery cell of claim 5, wherein
a width of the central portion of the sealing bonding part is less than a width of the edge portion of the sealing bonding part.

7. The battery cell of claim 1, further comprising
an elastic band configured to bring an edge portion of the sealing bonding part and the body part of the cover sheet into close contact with the first housing.

8. The battery cell of claim 1, wherein
the body part of the cover sheet is attached to the first housing.

9. The battery cell of claim 1, wherein
the first MTB further comprises an external terminal mounted in the first housing and connected to an electrode lead of the electrode assembly.

10. The battery cell of claim 1, wherein
the first MTB further comprises a rupture disk mounted in the first housing, and the rupture disk is configured to rupture and discharge a gas when internal pressure of the battery cell increases.

11. The battery cell of claim 1, wherein
the first MTB further comprises a check valve mounted in the first housing,
wherein the check valve is configured to be opened to discharge an internal gas when internal pressure of the battery cell is higher than reference pressure and to be closed after the internal pressure decreases.

12. The battery cell of claim 1, further comprising
a second MTB spaced apart from the first MTB in the first direction with the electrode assembly interposed between the first and second MTBs, and the second MTB comprises a second housing connected to the body part of the cover sheet.

13. A battery assembly comprising:
a plurality of battery cells;
a cooling pad between the plurality of battery cells;
an electrode assembly;
a cover sheet including a body part surrounding the electrode assembly and a sealing bonding part at a side of the body part and extending in a first direction, wherein the sealing bonding part includes at least one notch part; and
a multifunctional terminal block (MTB) provided at an end of the electrode assembly and including a housing connected to the body part.

14. The battery assembly of claim 13, wherein
the body part of the cover sheet comprises an upper portion covering an upper surface of the electrode assembly and a side portion covering a side surface of the electrode assembly,
the cooling pad is in contact with the side portion of the body part of the cover sheet, and
the sealing bonding part is connected to the upper portion of the bonding part of the cover sheet.

15. The battery assembly of claim 13, further comprising
a fixing tape configured to fix an edge portion of the sealing bonding part to the body part of the cover sheet, and
wherein the at least one notch part is provided to a central portion of the sealing bonding part.
